# EUROPÄISCHE PATENTSCHRIFT

(11) **EP 4 079 538 B1**
(45) Veröffentlichungstag und Bekanntmachung des Hinweises auf die Patenterteilung: **24.01.2024**
(21) Anmeldenummer: 22163871.1
(22) Anmeldetag: 23.03.2022
(51) Int. Cl.: B60C 1/00, C08L 9/06

(54) **SCHWEFELVERNETZBARE KAUTSCHUKMISCHUNG, VULKANISAT DER KAUTSCHUKMISCHUNG UND FAHRZEUGREIFEN**
SULPHUR-LINKABLE RUBBER COMPOUND, VULCANIZATE OF THE RUBBER COMPOUND AND VEHICLE TYRES
MÉLANGE DE CAOUTCHOUC RÉTICULABLE AU SOUFRE, VULCANISAT DU MÉLANGE DE CAOUTCHOUC ET PNEUMATIQUE DE VÉHICULE

(30) Priorität: 14.04.2021 DE 102021203677
(43) Veröffentlichungstag der Anmeldung: 26.10.2022
(73) Patentinhaber: Continental Reifen Deutschland GmbH, 30165 Hannover (DE)
(72) Erfinder: Dauer, David-Raphael, 30165 Hannover (DE); Davin, Julien, 30165 Hannover (DE); Hojdis, Nils, 30165 Hannover (DE); Müller, Norbert, 30165 Hannover (DE); Recker, Carla, 30165 Hannover (DE); Schax, Fabian, 30165 Hannover (DE); Schöffel, Julia, 30165 Hannover (DE); Tarantola, Gesa, 30165 Hannover (DE); Weber, Christine, 30165 Hannover (DE)
(74) Vertreter: Continental Corporation

(56) Entgegenhaltungen:
- EP-A1- 3 450 205
- EP-A1- 3 717 275
- EP-A1- 3 717 277
- EP-A1- 3 717 569

## Beschreibung

Die Erfindung betrifft eine schwefelvernetzbare Kautschukmischung, deren Vulkanisat und einen Fahrzeugreifen.

Die Kautschukzusammensetzung des Laufstreifens bestimmt in hohem Maße die Fahreigenschaften eines Fahrzeugreifens, insbesondere eines Fahrzeugluftreifens.

Ebenso sind die Kautschukmischungen, die in Riemen, Schläuchen und Gurten Verwendung vor allem in den mechanisch stark belasteten Stellen finden, für Stabilität und Langlebigkeit dieser Gummiartikel im Wesentlichen verantwortlich. Daher werden an diese Kautschukmischungen für Fahrzeugluftreifen, Gurte, Riemen und Schläuche sehr hohe Anforderungen gestellt.

Es bestehen Zielkonflikte zwischen den meisten der bekannten Reifeneigenschaften wie Nassgriffverhalten, Trockenbremsen, Handling-Verhalten, Rollwiderstand, Wintereigenschaften, Abriebverhalten und Reißeigenschaften.

Insbesondere bei Fahrzeugluftreifen wurden vielfältige Versuche unternommen, die Eigenschaften des Reifens durch die Variation der Polymerkomponenten, der Füllstoffe und der sonstigen Zuschlagstoffe vor allem in der Laufstreifenmischung positiv zu beeinflussen.

Dabei muss man berücksichtigen, dass eine Verbesserung in der einen Reifeneigenschaft oft eine Verschlechterung einer anderen Eigenschaft mit sich bringt.

In einem gegebenen Mischungssystem existieren zum Beispiel verschiedene, bekannte Möglichkeiten das Handling-Verhalten zu optimieren, in dem die Steifigkeit der Kautschukmischung erhöht wird. Zu erwähnen sind hier z.B. eine Erhöhung des Füllgrades und die Erhöhung der Netzknotendichte der vulkanisierten Kautschukmischung. Während ein erhöhter Füllstoffanteil Nachteile im Rollwiderstand mit sich bringt, führt die Anhebung des Netzwerkes zu einer Verschlechterung in den Reißeigenschaften sowie der Nassgriffindikatoren der Kautschukmischung.

Es ist außerdem bekannt, dass Kautschukmischungen, insbesondere für den Laufstreifen von Fahrzeugluftreifen, Kieselsäure als Füllstoff enthalten können. Zudem ist bekannt, dass sich Vorteile hinsichtlich des Rollwiderstandsverhaltens und der Prozessfähigkeit (Prozessierbarkeit) der Kautschukmischung ergeben, wenn die Kieselsäure mittels Silan-Kupplungsagenzien an das oder die Polymer(e) angebunden ist.

Im Stand der Technik bekannte Silan-Kupplungsagenzien gehen beispielsweise aus der DE 2536674 C3 und der DE 2255577 C3 hervor.

Prinzipiell kann unterschieden werden zwischen Silanen, die nur an Kieselsäure oder vergleichbare Füllstoffe anbinden und hierzu insbesondere wenigstens eine Silyl-Gruppe aufweisen, und Silanen, die zusätzlich zu einer Silyl-Gruppe eine reaktive Schwefel-Gruppierung, wie insbesondere eine Sₓ-Gruppierung (mit x > oder gleich 2) oder eine Mercapto-Gruppe S-H oder geblockte S-SG-Gruppierung aufweisen, wobei SG für Schutzgruppe steht, sodass das Silan durch Reaktion der Sₓ- oder S-H-Gruppierung oder der S-SG-Gruppierung nach Entfernen der Schutzgruppe bei der Schwefelvulkanisation auch an Polymere anbinden kann.

Im Stand der Technik sind zudem teilweise Kombinationen von ausgewählten Silanen offenbart.

Die EP 1085045 B1 offenbart eine Kautschukmischung enthaltend eine Kombination aus einem polysulfidischen Silan (Gemisch mit 69 bis 79 Gew.-% Disulfidanteil, 21 bis 31 Gew.-% Trisulfidanteil und 0 bis 8 Gew.-% Tetrasulfidanteil) und einem Silan, welches nur ein Schwefelatom aufweist und daher nicht an Polymere anbinden kann. Mit einem derartigen Silangemisch wird in Kombination mit Ruß und Kieselsäure als Füllstoff ein optimiertes Eigenschaftsbild hinsichtlich der Laborprediktoren für u. a. Rollwiderstand und Abrieb und beim Einsatz im Laufstreifen von Fahrzeugreifen optimale Reifeneigenschaften erzielt.

Die WO 2012092062 offenbart eine Kombination aus einem geblockten Mercaptosilan (NXT) mit füllstoffverstärkenden Silanen, welche zwischen den Silylgruppen nichtreaktive Alkylgruppen aufweisen.

Auch die WO 2019105614 A1 offenbart eine Kautschukmischung enthaltend eine Kombination aus einem an Polymere anbindenden Silan und einem füllstoffverstärkenden Silan.

Der vorliegenden Erfindung liegt nun die Aufgabe zugrunde, eine Kautschukmischung bereitzustellen, die im Vergleich zum Stand der Technik eine weitere Verbesserung im Eigenschaftsprofil umfassend das Abriebverhalten, das Rollwiderstandsverhalten und das Handling-Verhalten, insbesondere durch die Steifigkeit, aufweist. Gleichzeitig sollen die übrigen physikalischen Eigenschaften der Kautschukmischung für die Anwendung im Reifen nicht negativ beeinträchtig werden oder sogar ebenfalls verbessert werden.

Gelöst wird diese Aufgabe durch eine Kautschukmischung, die die folgenden Bestandteile enthält:
- wenigstens einen Dienkautschuk; und
- wenigstens eine Kieselsäure; und
- 1 bis 40 phr zumindest eines flüssigen Polymers F, welches ein Gewichtsmittel M_{w} des Molekulargewichts gemäß GPC von 500 bis 12000 g/mol aufweist; und
- 1 bis 30 phf wenigstens eines Silans A mit der allgemeinen Summenformel A-I)

   A-I) (R¹)ₒSi-R²-(S-R³)_{q}-S-X;

   und
- 0,5 bis 30 phf wenigstens eines Silans B mit der allgemeinen Summenformel B-I)

   B-I) (R¹)ₒSi-R²-(S-R³)ᵤ-S-R²-Si(R¹)ₒ

   wobei o gleich 1, 2 oder 3 sein kann und die Reste R¹ gleich oder verschieden voneinander sein können und ausgewählt sind aus C₁-C₁₀-Alkoxygruppen, C₆-C₂₀-Phenoxygruppen, C₂-C₁₀-cyclischen Dialkoxygruppen, C₂-C₁₀- Dialkoxygruppen, C₄-C₁₀- Cycloalkoxygruppen, C₆-C₂₀- Arylgruppen, C₁-C₁₀-Alkylgruppen, C₂-C₂₀- Alkenylgruppen, C₂-C₂₀- Alkinylgruppen, C₇-C₂₀- Aralkylgruppen, Halogeniden oder
   Alkylpolyethergruppe -O-(R⁶-O)ᵣ-R⁷, wobei die Reste R⁶ gleich oder verschieden sind und verzweigte oder unverzweigte, gesättigte oder ungesättigte, aliphatische, aromatische oder gemischt aliphatische/aromatische zweibindige C₁-C₃₀-Kohlenwasserstoffgruppen sind, r eine ganze Zahl von 1 bis 30 ist und die Reste R⁷ unsubstituierte oder substituierte, verzweigte oder unverzweigte einbindige Alkyl-, Alkenyl-, Aryl- oder Aralkylgruppen sind, oder
   zwei R¹ entsprechen einer Dialkoxygruppe mit 2 bis 10 Kohlenstoffatomen wobei dann o < 3 ist,
   oder es können zwei oder mehr Silane gemäß den Formeln A-I) und/oder B-I) über Reste R¹ oder durch Kondensation verbrückt sein; und
   wobei die Bedingung gilt, dass in den Formeln A-I) und B-I) in jeder (R¹)ₒSi-Gruppe wenigstens ein R¹ aus denjenigen oben genannten Möglichkeiten ausgewählt ist, bei der dieses R¹ i) über ein Sauerstoffatom an das Siliziumatom gebunden ist oder ii) ein Halogenid ist; und
   wobei die Reste R² und R³ in jedem Molekül und innerhalb eines Moleküls gleich oder verschieden sein können und verzweigte oder unverzweigte, gesättigte oder ungesättigte, aliphatische, aromatische oder gemischt aliphatische/aromatische zweibindige C₁-C₃₀-Kohlenwasserstoffgruppen sind; und wobei q gleich 1 oder 2 oder 3 ist; und u gleich 1 oder 2 oder 3 ist; und X ein Wasserstoffatom oder eine -C(=O)-R⁸ Gruppe ist wobei R⁸ ausgewählt ist aus Wasserstoff, C₁-C₂₀-Alkylgruppen, C₆-C₂₀-Arylgruppen, C₂-C₂₀-Alkenylgruppen und C₇-C₂₀-Aralkylgruppen.

Überraschenderweise hat sich herausgestellt, dass mit der Kombination der Silane A und B sowie einem flüssigen Polymer ein verbessertes Eigenschaftsbild der Kautschukmischung erzielt werden kann.

Von der Erfindung sind sämtliche vorteilhafte Ausgestaltungen, die sich unter anderem in den Patentansprüchen widerspiegeln, umfasst. Insbesondere sind von der Erfindung auch Ausgestaltungen umfasst, die sich durch Kombination unterschiedlicher Merkmale, beispielsweise von Bestandteilen der Kautschukmischung, unterschiedlicher Abstufungen bei der Bevorzugung dieser Merkmale ergeben, sodass auch eine Kombination eines ersten als "bevorzugt" bezeichneten Merkmals oder im Rahmen einer vorteilhaften Ausführungsform beschriebenen Merkmals mit einem weiteren als z. B. "besonders bevorzugt" bezeichneten Merkmal von der Erfindung umfasst ist.

Ein weiterer Gegenstand der vorliegenden Erfindung ist ein Vulkanisat wenigstens einer erfindungsgemäßen Kautschukmischung.

Ein weiterer Gegenstand der vorliegenden Erfindung ist ein Fahrzeugreifen, der wenigstens ein erfindungsgemäßes Vulkanisat der erfindungsgemäßen Kautschukmischung in wenigstens einem Bauteil aufweist. Bevorzugt weist der Fahrzeugreifen wenigstens ein erfindungsgemäßes Vulkanisat zumindest im Laufstreifen auf.

Das erfindungsgemäße Vulkanisat und der erfindungsgemäße Fahrzeugreifen zeichnen sich durch ein optimiertes Eigenschaftsprofil aus den oben genannten Eigenschaften aus.

Bei zweigeteilten Laufstreifen (oberer Teil: Cap und unterer Teil: Base) kann die erfindungsgemäße Kautschukmischung sowohl für die Cap als auch für die Base verwendet werden. Bevorzugt weist wenigstens die Cap oder wenigstens die Base oder wenigstens die Cap und die Base wenigstens ein erfindungsgemäßes Vulkanisat der erfindungsgemäßen Kautschukmischung auf.

Unter Fahrzeugreifen werden im Rahmen der vorliegenden Erfindung Fahrzeugluftreifen und Vollgummireifen, inklusive Reifen für Industrie- und Baustellenfahrzeuge, LKW-, PKW- sowie Zweiradreifen verstanden.

Die erfindungsgemäße Kautschukmischung ist ferner auch für andere Bauteile von Fahrzeugreifen geeignet, wie z. B. insbesondere dem Hornprofil, sowie für innere Reifenbauteile. Die erfindungsgemäße Kautschukmischung ist ferner auch für andere technische Gummiartikel, wie Bälge, Förderbänder, Luftfedern, Gurte, Riemen oder Schläuche, sowie Schuhsohlen geeignet.

Im Folgenden werden die Bestandteile der erfindungsgemäßen schwefelvernetzbaren Kautschukmischung näher beschrieben. Sämtliche Ausführungen gelten auch für das erfindungsgemäße Vulkanisat und den erfindungsgemäßen Fahrzeugreifen, der wenigstens ein erfindungsgemäßes Vulkanisat der erfindungsgemäßen Kautschukmischung in wenigstens in einem Bauteil aufweist.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird in dieser Schrift auf 100 Gewichtsteile der gesamten Masse aller in der Mischung vorhandenen Kautschuke bezogen mit einem Molekulargewicht M_{w} gemäß GPC von größer als 20000 g/mol.

Die in dieser Schrift verwendete Angabe phf (parts per hundred parts of filler by weight) ist dabei die in der Kautschukindustrie gebräuchliche Mengenangabe für Kupplungsagenzien für Füllstoffe.

Im Rahmen der vorliegenden Anmeldung bezieht sich phf auf die vorhandene Kieselsäure, das heißt, dass andere eventuell vorhandene Füllstoffe, wie Ruß, nicht in die Berechnung der Silanmenge mit eingehen.

Erfindungsgemäß ist die Kautschukmischung schwefelvernetzbar und enthält hierzu wenigstens einen Dienkautschuk.

Als Dienkautschuke werden Kautschuke bezeichnet, die durch Polymerisation oder Copolymerisation von Dienen und/oder Cycloalkenen entstehen und somit entweder in der Hauptkette oder in den Seitengruppen C=C-Doppelbindungen aufweisen.

Der Dienkautschuk ist dabei bevorzugt ausgewählt aus der Gruppe bestehend aus natürlichem Polyisopren (Naturkautschuk, NR), synthetischem Polyisopren (IR), epoxidiertem Polyisopren, Butadien-Kautschuk (BR), Butadien-Isopren-Kautschuk, lösungspolymerisiertem Styrol-Butadien-Kautschuk (SSBR), emulsionspolymerisiertem Styrol-Butadien-Kautschuk (ESBR), Styrol-Isopren-Kautschuk, Flüssigkautschuken mit einem Molekulargewicht Mw von größer als 20000 g/mol, Halobutyl-Kautschuk, Polynorbornen, Isopren-Isobutylen-Copolymer, Ethylen-Propylen-Dien-Kautschuk, NitrilKautschuk, Chloropren-Kautschuk, Acrylat-Kautschuk, Fluor-Kautschuk, SilikonKautschuk, Polysulfid-Kautschuk, Epichlorhydrin-Kautschuk, Styrol-Isopren-Butadien-Terpolymer, hydriertem Acrylnitrilbutadien-Kautschuk und hydriertem Styrol-Butadien-Kautschuk.

Insbesondere Nitrilkautschuk, hydrierter Acrylnitrilbutadienkautschuk, Chloroprenkautschuk, Butylkautschuk, Halobutylkautschuk oder Ethylen-Propylen-Dien-Kautschuk kommen bei der Herstellung von technischen Gummiartikeln, wie Gurte, Riemen und Schläuche, und/oder Schuhsohlen zum Einsatz. Dabei finden die dem Fachmann für diese Kautschuke bekannten - im Hinblick auf Füllstoffe, Weichmacher, Vulkanisationssysteme und Zuschlagstoffe besonderen - Mischungszusammensetzungen bevorzugte Anwendung.

Bei dem natürlichen und/oder synthetischen Polyisopren sämtlicher Ausführungsformen kann es sich sowohl um cis-1,4-Polyisopren als auch um 3,4-Polyisopren handeln. Bevorzugt ist allerdings die Verwendung von cis-1,4-Polyisoprenen mit einem cis-1,4 Anteil > 90 Gew.-%. Zum einen kann solch ein Polyisopren durch stereospezifische Polymerisation in Lösung mit Ziegler-Natta-Katalysatoren oder unter Verwendung von fein verteilten Lithiumalkylen erhalten werden. Zum anderen handelt es sich bei Naturkautschuk (NR) um ein solches cis-1,4 Polyisopren, bei welchem der cis-1,4-Anteil im Naturkautschuk größer 99 Gew.-% ist.

Ferner ist auch ein Gemisch eines oder mehrerer natürlicher Polyisoprene mit einem oder mehreren synthetischen Polyisopren(en) denkbar.

Im Rahmen der vorliegenden Erfindung ist unter dem Begriff "Naturkautschuk" natürlich vorkommender Kautschuk zu verstehen, der von Hevea Gummibäumen und "Nicht-Hevea" Quellen gewonnen werden kann. Nicht-Hevea Quellen sind beispielsweise Guayule Sträucher und Löwenzahn wie beispielsweise TKS (Taraxacum kok-saghyz; Russischer Löwenzahn).

Falls in der erfindungsgemäßen Kautschukmischung Butadien-Kautschuk (= BR, Polybutadien) enthalten ist, kann es sich um alle dem Fachmann bekannten Typen handeln. Darunter fallen u.a. die sogenannten high-cis- und low-cis-Typen, wobei Polybutadien mit einem cis-Anteil größer oder gleich 90 Gew.-% als high-cis-Typ und Polybutadien mit einem cis-Anteil kleiner als 90 Gew.-% als low-cis-Typ bezeichnet wird. Ein low-cis-Polybutadien ist z.B. Li-BR (Lithium-katalysierter Butadien-Kautschuk) mit einem cis-Anteil von 20 bis 50 Gew.-%. Mit einem high-cis BR werden besonders gute Abriebeigenschaften sowie eine niedrige Hysterese der Kautschukmischung erzielt.

Das oder die eingesetzte(n) Polybutadiene kann/können Funktionalisierungen endgruppenmodifiziert und/oder entlang der Polymerketten modifiziert sein. Die Begriffe "Funktionalisierung" und "Modifizierung" werden synonym verwendet.

Bei der Modifizierung kann es sich um solche mit Hydroxy-Gruppen und/oder EthoxyGruppen und/oder Epoxy-Gruppen und/oder Siloxan-Gruppen und/oder Amino-Gruppen und/oder Aminosiloxan und/oder Carboxy-Gruppen und/oder Phthalocyanin-Gruppen und/oder Silan-Sulfid-Gruppen handeln.

Es kommen aber auch weitere dem Fachmann bekannte Funktionalisierungen in Frage. Bestandteil solcher Funktionalisierungen können Metallatome sein.

Für den Fall, dass wenigstens ein Styrol-Butadien-Kautschuk (Styrol-Butadien-Copolymer) in der Kautschukmischung enthalten ist, kann es sich sowohl um lösungspolymerisierten Styrol-Butadien-Kautschuk (SSBR) als auch um emulsionspolymerisierten Styrol-Butadien-Kautschuk (ESBR) handeln, wobei auch ein Gemisch aus wenigstens einem SSBR und wenigstens einem ESBR eingesetzt werden kann. Die Begriffe "Styrol-Butadien-Kautschuk" und "Styrol-Butadien-Copolymer" werden im Rahmen der vorliegenden Erfindung synonym verwendet.

Das eingesetzte Styrol-Butadien-Copolymer kann mit den oben beim Polybutadien genannten Modifizierungen / Funktionalisierungen endgruppenmodifiziert und/oder entlang der Polymerketten modifiziert sein.

Gemäß vorteilhafter Ausführungsformen ist der Dienkautschuk, insbesondere bei der Verwendung der Kautschukmischung in Fahrzeugreifen, ausgewählt aus der Gruppe bestehend aus natürlichem Polyisopren (Naturkautschuk, NR), synthetischem Polyisopren (IR), Butadien-Kautschuk (BR), lösungspolymerisiertem Styrol-Butadien-Kautschuk (SSBR), emulsionspolymerisiertem Styrol-Butadien-Kautschuk (ESBR), Butylkautschuk (IIR) und Halobutylkautschuk.

Gemäß besonders vorteilhafter Ausführungsformen der Erfindung ist der Dienkautschuk ausgewählt aus der Gruppe bestehend aus natürlichem Polyisopren (NR), synthetischem Polyisopren (IR), Butadien-Kautschuk (BR), lösungspolymerisiertem Styrol-Butadien-Kautschuk (SSBR) und emulsionspolymerisiertem Styrol-Butadien-Kautschuk (ESBR). Eine derartige Kautschukmischung ist insbesondere für den Laufstreifen von Fahrzeugreifen geeignet.

Gemäß besonders vorteilhafter Ausführungsformen der Erfindung ist der Dienkautschuk ausgewählt aus der Gruppe bestehend aus natürlichem Polyisopren (NR), Butadien-Kautschuk (BR) und lösungspolymerisiertem Styrol-Butadien-Kautschuk (SSBR). Eine derartige Kautschukmischung ist besonders gut für den Laufstreifen von Fahrzeugreifen geeignet.

Gemäß einer besonders vorteilhaften Ausführungsform der Erfindung enthält die Kautschukmischung wenigstens ein natürliches Polyisopren und zwar bevorzugt in Mengen von 2 bis 100 phr, und gemäß einer besonders vorteilhaften Ausführungsform der Erfindung 5 bis 30 phr, ganz besonders bevorzugt 5 bis 15 phr. Hiermit wird eine besonders gute Prozessierbarkeit der erfindungsgemäßen Kautschukmischung erzielt.

Gemäß einer besonders vorteilhaften Ausführungsform der Erfindung enthält die Kautschukmischung wenigstens ein Polybutadien (Butadienkautschuk) und zwar bevorzugt in Mengen von 2 bis 100 phr, und gemäß einer besonders vorteilhaften Ausführungsform der Erfindung 5 bis 50 phr, ganz besonders bevorzugt 10 bis 25 phr. Hiermit werden besonders gute Abrieb- und Reißeigenschaften und eine gute Prozessierbarkeit bei geringem Hystereseverlust der erfindungsgemäßen Kautschukmischung erzielt.

Gemäß einer besonders vorteilhaften Ausführungsform der Erfindung enthält die Kautschukmischung wenigstens ein Styrol-Butadien-Kautschuk (SBR) und zwar bevorzugt in Mengen von 2 bis 100 phr, und gemäß einer besonders vorteilhaften Ausführungsform der Erfindung 25 bis 80 phr, ganz besonders bevorzugt 65 bis 85 phr. Hiermit wird eine gute Prozessierbarkeit bei geringem Hystereseverlust sowie guten Abrieb- und Reißeigenschaften der erfindungsgemäßen Kautschukmischung erzielt.

Bevorzugt ist der SBR hierbei ein SSBR, womit sich optimierte Hysterese-Eigenschaften ergeben.

Gemäß einer besonders vorteilhaften Ausführungsform der Erfindung enthält die Kautschukmischung ein Polymerblend aus den genannten Kautschuken NR, BR und SBR, bevorzugt SSBR, und zwar bevorzugt in den jeweils genannten Mengen in sämtlichen denkbaren Kombinationen, wobei die Summe aller enthaltenen Kautschuke 100 phr ergibt. Eine besonders vorteilhafte Ausführungsform besteht darin, dass die Kautschukmischung 5 bis 30 phr wenigstens eines natürlichen und/oder wenigstens eines synthetischen Polyisoprens und 25 bis 80 phr wenigstens eines Styrol-Butadien-Kautschuks und 5 bis 50 phr wenigstens eines Butadien-Kautschuks enthält.

Erfindungsgemäß enthält die Kautschukmischung wenigstens eine Kieselsäure.

Bei der Kieselsäure kann es sich um die dem Fachmann bekannten Kieselsäuretypen, die als Füllstoff für Reifenkautschukmischungen geeignet sind, handeln. Besonders bevorzugt ist es allerdings, wenn eine fein verteilte, gefällte Kieselsäure verwendet wird, die eine Stickstoff-Oberfläche (BET-Oberfläche) (gemäß DIN ISO 9277 und DIN 66132) von 35 bis 400 m²/g, bevorzugt von 35 bis 350 m²/g, besonders bevorzugt von 85 bis 320 m²/g und ganz besonders bevorzugt von 120 bis 235 m²/g, und eine CTAB-Oberfläche (gemäß ASTM D 3765) von 30 bis 400 m²/g, bevorzugt von 30 bis 330 m²/g, besonders bevorzugt von 80 bis 300 m²/g und ganz besonders bevorzugt von 110 bis 230 m²/g, aufweist. Derartige Kieselsäuren führen z. B. in Kautschukmischungen für Reifenlaufstreifen zu besonders guten physikalischen Eigenschaften der Vulkanisate. Außerdem können sich dabei Vorteile in der Mischungsverarbeitung durch eine Verringerung der Mischzeit bei gleichbleibenden Produkteigenschaften ergeben, die zu einer verbesserten Produktivität führen. Als Kieselsäuren können somit z. B. sowohl jene des Typs Ultrasil^{®} VN3 (Handelsname) der Firma Evonik als auch hoch dispergierbare Kieselsäuren, so genannte HD-Kieselsäuren (z. B. Zeosil^{®} 1165 MP der Firma Solvay), zum Einsatz kommen.

Die erfindungsgemäße Kautschukmischung enthält gemäß einer bevorzugten Ausführungsform der Erfindung 20 bis 300 phr, bevorzugt 20 bis 250 phr, besonders bevorzugt 40 bis 150 phr und ganz besonders bevorzugt 70 bis 100 phr.

Für den Fall, dass wenigstens zwei verschiedene Kieselsäuren, die sich z. B. durch ihre BET-Oberfläche unterscheiden, in der erfindungsgemäßem Kautschukmischung enthalten sind, beziehen sich die genannten Mengenangaben immer auf die Gesamtmenge aller enthaltenen Kieselsäuren.

Die Begriffe "Kieselsäure" und "Silika" werden im Rahmen der vorliegenden Erfindung synonym verwendet.

Die erfindungsgemäße Kautschukmischung kann ferner wenigstens einen Ruß, insbesondere einen Industrieruß enthalten.

Als Ruße kommen alle der fachkundigen Person bekannten Rußtypen in Frage.

Gemäß einer vorteilhaften Ausführungsform der Erfindung enthält die Kautschukmischung 0 phr an Rußen.

Gemäß einer weiteren vorteilhaften Ausführungsform der Erfindung enthält die Kautschukmischung 0,1 bis 20 phr, insbesondere 0,1 bis 10 phr an Rußen.

Die erfindungsgemäße Kautschukmischung kann, bevorzugt möglichst geringe Mengen d.h. bevorzugt 0 bis 20 phr, besonders bevorzugt 0 bis 10 phr, weitere Füllstoffe enthalten. Zu den weiteren (nicht verstärkenden) Füllstoffen zählen im Rahmen der vorliegenden Erfindung Alumosilicate, Kaolin, Kreide, Stärke, Magnesiumoxid, Titandioxid oder Kautschukgele sowie Fasern (wie zum Beispiel Aramidfasern, Glasfasern, Carbonfasern, Cellulosefasern).

Weitere ggf. verstärkende Füllstoffe sind z.B. Kohlenstoffnanoröhrchen (carbon nanotubes (CNT) inklusive diskreter CNTs, sogenannte hollow carbon fibers (HCF) und modifizierte CNT enthaltend eine oder mehrere funktionelle Gruppen, wie Hydroxy-, Carboxy und Carbonyl-Gruppen), Graphit und Graphene und sogenannte "carbon-silica dual-phase filler".

Zinkoxid gehört im Rahmen der vorliegenden Erfindung nicht zu den Füllstoffen.

Erfindungswesentlich enthält die schwefelvernetzbare Kautschukmischung 1 bis 40 phr zumindest eines flüssigen Polymers F, welches ein Gewichtsmittel M_{w} des Molekulargewichts gemäß GPC von 500 bis 12000 g/mol aufweist.

Hierbei beinhaltet der Wertebereich des Mw, dass es sich bei Raumtemperatur um ein flüssiges Polymer handelt. Der Einfachheit halber wird deshalb im Rahmen der vorliegenden Erfindung auch der kurze Ausdruck "flüssiges Polymer" verwendet.

Die Bestimmung des Gewichtsmittels Mw des Molekulargewichtes der Polymere erfolgt mittels Gelpermeationschromatographie (GPC mit Tetrahydrofuran (THF) als Elutionsmittel bei 40 °C, Apparat PPS, kalibriert mit Polystyrol-Standard; Größenausschlußchromatographie; engl. SEC = size exclusion chromatography in Anlehnung an BS ISO 11344:2004).

Im Rahmen der vorliegenden Erfindung wird die Abkürzung Mw für das Gewichtsmittel des Molekulargewichts bzw. der Molekulargewichtsverteilung verwendet.

Das flüssige Polymer F kann aus dem Fachmann bekannten Monomeren aufgebaut sein, sodass es sich bevorzugt insbesondere für die Verwendung in einer Kautschukmischung für Fahrzeugreifen eignet.

Gemäß vorteilhafter Ausführungsformen ist das flüssige Polymer F ein Polybutadien, Polyisopren oder Styrol-Butadien-Copolymer.

Besonders bevorzugt ist das flüssige Polymer F ein Polybutadien. Hiermit wird ein besonders gutes Eigenschaftsbild der erfindungsgemäßen Kautschukmischung erzielt.

Das flüssige Polymer F kann unfunktionalisiert oder funktionalisiert sein.

Gemäß besonders vorteilhafter Ausführungsformen der Erfindung ist das flüssige Polymer F endständig organosilicium-modifiziert ist.

Hiermit ergeben sich insbesondere weiter verbesserte Rollwiderstandseigenschaften bei sehr guten Handling- und Abriebeigenschaften. Dabei liegt die Kautschukmischung auch im Zielkonflikt aus Rollwiderstand und Nassgriff auf einem hohen Niveau.

Die Angabe des Gewichtsmittels der Molekulargewichtsverteilung Mw bezieht sich im Falle von modifizierten flüssigen Polymeren auf das Polymer inklusive der Organosilicium-Modifizierung.

Gemäß vorteilhafter Ausführungsformen der Erfindung ist das flüssige Polymer endständig, d. h. an wenigstens einem Kettenende, mit zumindest einem Rest gemäß Formel I) modifiziert:

I) (R¹⁰R²⁰R³⁰)Si-

wobei R¹⁰, R²⁰, R³⁰ in den Strukturen gleich oder verschieden sein können und ausgewählt sein können aus linearen oder verzweigten Alkoxy-, Cycloalkoxy,- Alkyl-, Cycloalkyl- oder Arylgruppen mit 1 bis 20 Kohlenstoffatomen, und wobei der Rest gemäß Formel I) direkt oder über eine Brücke an die Polymerkette des Polybutadiens angebunden ist und wobei die Brücke aus einer gesättigten oder ungesättigten Kohlenstoffkette besteht, die auch cyclische und/oder aliphatische und/oder aromatische Elemente sowie in oder an der Kette Heteroatome enthalten kann.

Mit einer derartigen Modifizierung ergeben sich besonders gute Rollwiderstandsindikatoren.

Gemäß einer bevorzugten Ausführungsform der Erfindung sind alle Gruppen R¹⁰, R²⁰, R³⁰ Alkoxygruppen.

Das flüssige Polymer F dieser Ausführungsform ist somit an wenigstens einem Kettenende mit einer Trialkoxysilyl-Gruppe modifiziert.

Besonders bevorzugt ist wenigstens eine der drei Gruppen R¹⁰, R²⁰, R³⁰ eine Ethoxygruppe. Ganz besonders bevorzugt handelt es sich bei allen drei Gruppen R¹⁰, R²⁰, R³⁰ um jeweils eine Ethoxygruppe (abgekürzt mit OEt).

Gemäß einer bevorzugten Ausführungsform der Erfindung ist der Rest gemäß Formel I) nicht direkt, sondern über eine Brücke angebunden. Bevorzugt ist damit ein Rest inkl. Brücke gemäß Formel II) an die Polymerkette des Polymers angebunden.

II) (R¹⁰, R²⁰, R³⁰)Si-Y-Z-

wobei in Formel II) Y eine Alkylkette (-CH₂)ₙ- mit n = 1 bis 8 ist und Z eine funktionelle Gruppe, die ausgewählt ist aus der Gruppe bestehend aus Ester, Ether, Urethan, Harnstoff, Amin, Amid, Thioether, Thioester, ist.

Unter Urethan wird im Rahmen der vorliegenden Erfindung eine Gruppierung -N(H)-C(O)-O- verstanden.

Gemäß einer besonders vorteilhaften Ausführungsform der Erfindung ist das flüssige Polymer F ein flüssiges Polybutadien und mit einem Rest wie in Formel III) gezeigt modifiziert, wobei PB für Polybutadien steht.

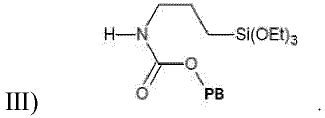

Erfindungsgemäß enthält die Kautschukmischung 1 bis 30 phf, bevorzugt 2 bis 20 phf, besonders bevorzugt 2 bis 10 phf, wenigstens eines Silans A mit der allgemeinen Summenformel A-I)

A-I) (R¹)ₒSi-R²-(S-R³)_{q}-S-X;

und 0,5 bis 30 phf, bevorzugt 0,5 bis 20 phf, besonders bevorzugt 1 bis 10 phf, wenigstens eines Silans B mit der allgemeinen Summenformel B-I)

B-I) (R¹)ₒSi-R²-(S-R³)ᵤ-S-R²-Si(R¹)ₒ .

Das erfindungsgemäß enthaltene Silan A ist durch die S-X-Gruppierung ein Silan, welches durch Abspalten von X, also des Wasserstoffatoms oder der -C(=O)-R⁸ Gruppe, an Polymere anbinden kann.

Es können auch verschiedene Silane mit verschiedenen Gruppen X im Gemisch vorliegen. X ist ein Wasserstoffatom oder eine -C(=O)-R⁸ Gruppe, wobei R⁸ ausgewählt ist aus Wasserstoff, C₁-C₂₀ Alkylgruppen, vorzugsweise C₁-C₁₇,
C₆-C₂₀-Arylgruppen, vorzugsweise Phenyl,
C₂-C₂₀-Alkenylgruppen und C₇-C₂₀-Aralkylgruppen.

Bevorzugt ist X eine -C(=O)-R⁸ Gruppe, wobei R⁸ besonders bevorzugt eine C₁-C₂₀ Alkylgruppe ist; X ist hierbei somit eine Alkanoylgruppe.

Gemäß einer vorteilhaften Ausführungsform weist die Alkanoylgruppe insgesamt 1 bis 3 Kohlenstoffatome, insbesondere 2 Kohlenstoffatome auf.

Gemäß einer weiteren vorteilhaften Ausführungsform weist die Alkanoylgruppe insgesamt 7 bis 9 Kohlenstoffatome, insbesondere 8 Kohlenstoffatome auf.

Der Index q kann die Werte 1 oder 2 oder 3 annehmen. Bevorzugt ist q gleich 1.

Das erfindungsgemäß enthaltene Silan B weist einzelne Schwefelatome auf, die nicht an die Polymerketten des Dienkautschuks anbinden können, da die chemische Bindung -C-S-C- sich während der Vulkanisation üblicherweise nicht öffnet.

Der Index u kann die Werte 1 oder 2 oder 3 annehmen. Bevorzugt ist u gleich 1.

Bevorzugt ist R² eine Alkylgruppe mit 2 oder 3 Kohlenstoffatomen und dabei bevorzugt -CH₂CH₂- oder -CH₂CH₂CH₂-, besonders bevorzugt -CH₂CH₂CH₂-.

Bevorzugt ist R³ eine Alkylgruppe mit 4 bis 8 Kohlenstoffatomen und dabei bevorzugt -CH₂CH₂CH₂CH₂CH₂-, -CH₂CH₂CH₂CH₂CH₂CH₂-, -CH₂CH₂CH₂CH₂CH₂CH₂CH₂-, -CH₂CH₂CH₂CH₂CH₂CH₂CH₂CH₂-, besonders bevorzugt -CH₂CH₂CH₂CH₂CH₂CH₂-.

Sämtliche genannten Reste R¹ und Verbrückungen von einem oder mehreren Silanen über Reste R¹ können innerhalb einer Silyl-Gruppe miteinander kombiniert sein.

Für den Fall, dass zwei R¹ einer Dialkoxygruppe mit 2 bis 10 Kohlenstoffatomen entsprechen und dann o < 3 (o kleiner drei) ist, ist das Siliziumatom Teil eines Ringsystems.

Für den Fall, dass zwei Silane gemäß Formel A-I) und/oder B-I) mit einander verbrückt sind, teilen sie sich einen Rest R¹ oder sind durch Kombination zweier Si-R¹-Gruppen miteinander über ein Sauerstoffatom verknüpft. Auf diese Weise können auch mehr als zwei Silane aneinander verknüpft sein. Im Anschluss an die Synthese des Silans gemäß Formel A-I) und/oder B-I) ist es somit denkbar, dass zwei Silane gemäß Formel A-I) und/oder B-I) über ein Sauerstoffatom oder über die Reste R¹ miteinander verbrückt werden. Auf diese Weise können auch mehr als zwei Silane aneinander verknüpft werden, wie beispielsweise über Dialkoxygruppen.

Die erfindungsgemäße Kautschukmischung kann somit auch Oligomere, die durch Hydrolyse und Kondensation oder durch Verbrücken mittels Dialkoxygruppen als R¹ der Silane A und/oder Silane B (Silane der Formel A-I) und/oder B-I)) entstehen, enthalten.

Die Silane gemäß den Formeln A-I) und B-I) umfassen durch die Bedingung, dass in den Formeln A-I) und B-I) in jeder (R¹)ₒSi-Gruppe wenigstens ein R¹ aus denjenigen oben genannten Möglichkeiten ausgewählt ist, bei der dieses R¹ i) über ein Sauerstoffatom an das Siliziumatom gebunden ist oder ii) ein Halogenid ist, jeweils wenigstens einen Rest R¹, der als Abgangsgruppe dienen kann.

Insbesondere sind dies somit Alkoxy-Gruppen, Phenoxy-Gruppen oder sämtliche andere der genannten Gruppen, die mit einem Sauerstoffatom an das Siliziumatom gebunden sind, oder Halogenide.

Es ist bevorzugt, dass die Reste R¹ Alkylgruppen mit 1 bis 6 Kohlenstoffatomen oder Alkoxygruppen mit 1 bis 6 Kohlenstoffatomen oder Halogenide umfassen, besonders bevorzugt sind Alkoxygruppen mit 1 bis 6 Kohlenstoffatomen.

Gemäß einer besonders vorteilhaften Ausführungsform der Erfindung sind die Reste R¹ innerhalb einer Silylgruppe (R¹)ₒSi- gleich und Alkoxygruppen mit 1 oder 2 Kohlenstoffatomen, also Methoxygruppen oder Ethoxygruppen, ganz besonders bevorzugt Ethoxygruppen, wobei o gleich 3 ist.

Aber auch bei Oligomeren oder im Fall, dass zwei R¹ eine Dialkoxy-Gruppe bilden, sind die übrigen Reste R¹ bevorzugt Alkylgruppen mit 1 bis 6 Kohlenstoffatomen oder Halogenide oder Alkoxygruppen mit 1 bis 6 Kohlenstoffatomen, bevorzugt 1 oder 2 Kohlenstoffatomen, also Methoxygruppen oder Ethoxygruppen, ganz besonders bevorzugt Ethoxygruppen.

Im Rahmen der vorliegenden Erfindung werden Ethoxygruppen in den Formeln der Silane mit EtO bzw. OEt abgekürzt dargestellt. Die beiden Schreibweisen verdeutlichen, dass Alkoxygruppen, wie Ethoxygruppen, über das Sauerstoffatom O an das Siliziumatom Si gebunden sind.

Prinzipiell können die Abkürzungen OEt und EtO aber im Rahmen der vorliegenden Erfindung synonym verwendet werden.

Gemäß einer bevorzugten Ausführungsform der Erfindung hat das Silan A die folgende Struktur gemäß Formel A-II):

A-II) (EtO)₃Si-(CH₂)₃-S-(CH₂)₆-S-C(=O)-CH₃

Gemäß einer bevorzugten Ausführungsform der Erfindung hat das Silan A die folgende Struktur gemäß Formel A-III):

A-III) (EtO)₃Si-(CH₂)₃-S-(CH₂)₆-S-C(=O)-(CH₂)₆-CH₃ .

Es ist auch denkbar, dass die erfindungsgemäße Kautschukmischung ein Gemisch zweier oder mehrerer der Silane A-II) und A-III) enthält.

Es ist auch denkbar, dass die erfindungsgemäße Kautschukmischung ein Gemisch der Silane A-II) und/oder A-III) mit wenigstens einem weiteren Silan der übergeordneten Formel A-I) enthält.

Die Gesamtmenge an enthaltenen Silanen A, die unter die Formel A-I) fallen, beträgt in jedem Fall 1 bis 30 phf, bevorzugt 2 bis 20 phf, besonders bevorzugt 2 bis 10 phf.

Gemäß einer bevorzugten Ausführungsform der Erfindung hat das Silan B die folgende Struktur gemäß Formel B-II): 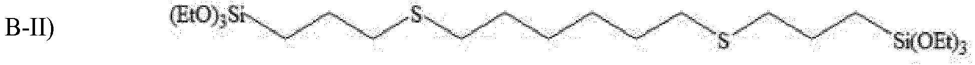 , also (EtO)₃Si-(CH₂)₃-S-(CH₂)₆-S-(CH₂)₃-Si(OEt)₃.

Insbesondere mit einem Silan gemäß Formel B-II) werden besonders optimierte Handling- und Rollwiderstands-Prediktoren erzielt.

Es ist auch denkbar, dass die erfindungsgemäße Kautschukmischung ein Gemisch zweier Silane der Formel B-I), wie z. B. B-II) mit einem weiteren Silan der Formel B-I) enthält. Die Gesamtmenge an enthaltenen Silanen B, die unter die Formel B-I) fallen, beträgt in jedem Fall 0,5 bis 30 phf, bevorzugt 0,5 bis 20 phf, besonders bevorzugt 0,5 bis 10 phf.

Insbesondere mit den bevorzugten und besonders bevorzugten Mengen und Ausführungsformen der Silane A und B ergeben sich sehr gute Eigenschaften hinsichtlich Rollwiderstands- und Handling-Prediktoren sowie dem Abriebverhalten.

Besonders bevorzugt beträgt das Molverhältnis an enthaltenen Silanen A zu enthaltenen Silanen B 20:80 bis 90:10, bevorzugt 55:45 bis 70:30.

Des Weiteren kann die Kautschukmischung übliche Zusatzstoffe in üblichen Gewichtsteilen enthalten, die bei deren Herstellung bevorzugt in wenigstens einer Grundmischstufe zugegeben werden. Zu diesen Zusatzstoffen zählen
a) Alterungsschutzmittel, wie z. B. Diamine, wie N-Phenyl-N'-(1,3-dimethylbutyl)-p-phenylendiamin (6PPD), N,N`-Diphenyl-p-phenylendiamin (DPPD), N,N'-Ditolyl-p-phenylendiamin (DTPD), N-(1,4-dimethylpentyl)-N'-phenyl-p-phenylendiamin (7PPD), N-Isopropyl-N'-phenyl-p-phenylendiamin (IPPD), oder Dihydrochinoline, wie 2,2,4-Trimethyl-1,2-dihydrochinolin (TMQ),
b) Aktivatoren, wie z. B. Zinkoxid und Fettsäuren (z. B. Stearinsäure) und/oder sonstige Aktivatoren, wie Zinkkomplexe wie z.B. Zinkethylhexanoat,
c) Aktivatoren und/oder Agenzien für die Anbindung von Füllstoffen, insbesondere Ruß, wie beispielsweise S-(3-Aminopropyl)Thioschwefelsäure und/oder deren Metallsalze (Anbindung an Ruß),
d) Ozonschutzwachse,
e) Harze, insbesondere Klebharze für innere Reifenbauteile,
f) Mastikationshilfsmittel, wie z. B. 2,2'-Dibenzamidodiphenyldisulfid (DBD) und
g) Prozesshilfsmittel, wie insbesondere Fettsäureester und Metallseifen, wie z.B. Zinkseifen und/oder Calciumseifen
h) Weichmacher, wie insbesondere wie aromatische, naphthenische oder paraffinische Mineralölweichmacher, wie z.B. MES (mild extraction solvate) oder RAE (Residual Aromatic Extract) oder TDAE (treated distillate aromatic extract), oder Rubber-to-Liquid-Öle (RTL) oder Biomass-to-Liquid-Öle (BTL) bevorzugt mit einem Gehalt an polycyclischen Aromaten von weniger als 3 Gew.-% gemäß Methode IP 346 oder Triglyceride, wie z. B. Rapsöl, oder Faktisse oder Kohlenwasserstoffharze.

Bei der Verwendung von Mineralöl ist dieses bevorzugt ausgewählt aus der Gruppe, bestehend aus DAE (Destillated Aromatic Extracts), RAE (Residual Aromatic Extract), TDAE (Treated Destillated Aromatic Extracts), MES (Mild Extracted Solvents) und naphthenischen Ölen.

Der Mengenanteil der Gesamtmenge an weiteren Zusatzstoffen beträgt bevorzugt 3 bis 150 phr, besonders bevorzugt 3 bis 100 phr und ganz besonders bevorzugt 5 bis 80 phr.

Im Gesamtmengenanteil der weiteren Zusatzstoffe kann Zinkoxid (ZnO) enthalten sein. Hierbei kann es sich um alle dem Fachmann bekannten Typen an Zinkoxid handeln, wie z.B. ZnO-Granulat oder -Pulver. Das herkömmlicherweise verwendete Zinkoxid weist in der Regel eine BET-Oberfläche von weniger als 10 m²/g auf. Es kann aber auch ein Zinkoxid mit einer BET-Oberfläche von 10 bis 100 m²/g, wie z.B. so genannte "nano-Zinkoxide", verwendet werden.

Die erfindungsgemäße Kautschukmischung wird bevorzugt vulkanisiert verwendet, insbesondere in Fahrzeugreifen oder anderen vulkanisierten technischen Gummiartikeln. Die Begriffe "vulkanisiert" und "vernetzt" werden im Rahmen der vorliegenden Erfindung synonym verwendet.

Die Vulkanisation der erfindungsgemäßen Kautschukmischung wird bevorzugt in Anwesenheit von Schwefel und/oder Schwefelspendern mit Hilfe von Vulkanisationsbeschleunigern durchgeführt, wobei einige Vulkanisationsbeschleuniger zugleich als Schwefelspender wirken können. Dabei ist der Beschleuniger ausgewählt aus der Gruppe bestehend aus Thiazolbeschleunigern, Mercaptobeschleunigern, Sulfenamidbeschleunigern, Thiocarbamatbeschleunigern, Thiurambeschleunigem, Thiophosphatbeschleunigern, Thioharnstoffbeschleunigern, Xanthogenat-Beschleunigern und Guanidin-Beschleunigern.

Bevorzugt ist die Verwendung eines Sulfenamidbeschleunigers, der ausgewählt ist aus der Gruppe bestehend aus N-Cyclohexyl-2-benzothiazolsufenamid (CBS), N,N-Dicyclohexylbenzothiazol-2-sulfenamid (DCBS), Benzothiazyl-2-sulfenmorpholid (MBS), N-tert-Butyl-2-benzothiazylsulfenamid (TBBS) und Guanidin-Beschleunigern wie Diphenylguanidin (DPG).

Als schwefelspendende Substanz können dabei alle dem Fachmann bekannten schwefelspendenden Substanzen verwendet werden.

Außerdem können in der Kautschukmischung Vulkanisationsverzögerer vorhanden sein.

Die Herstellung der Kautschukmischung erfolgt ansonsten nach dem in der Kautschukindustrie üblichen Verfahren, bei dem zunächst in ein oder mehreren Mischstufen eine Grundmischung mit allen Bestandteilen außer dem Vulkanisationssystem (z. B. Schwefel und vulkanisationsbeeinflussende Substanzen) hergestellt wird. Durch Zugabe des Vulkanisationssystems in einer letzten Mischstufe wird die Fertigmischung erzeugt.

Die Fertigmischung wird z.B. durch einen Extrusionsvorgang oder Kalandrieren weiterverarbeitet und in die entsprechende Form gebracht.

Die erfindungsgemäße Kautschukmischung ist besonders für die Verwendung in Fahrzeugreifen, insbesondere Fahrzeugluftreifen geeignet. Hierbei ist die Anwendung in allen Reifenbauteilen prinzipiell denkbar, insbesondere in einem Laufstreifen, insbesondere in der Cap eines Laufstreifens mit Cap/Base-Konstruktion, wie oben bereits beschrieben.

Zur Verwendung in Fahrzeugreifen wird die Mischung als Fertigmischung vor der Vulkanisation bevorzugt in die Form eines Laufstreifens gebracht und bei der Herstellung des Fahrzeugreifenrohlings wie bekannt aufgebracht.

Die Herstellung der erfindungsgemäßen Kautschukmischung zur Verwendung als Seitenwand oder sonstige Body- Mischung in Fahrzeugreifen erfolgt wie bereits beschrieben. Der Unterschied liegt in der Formgebung nach dem Extrusionsvorgang bzw. dem Kalandrieren der Mischung. Die so erhaltenen Formen der noch unvulkanisierten Kautschukmischung für eine oder mehrere unterschiedliche Body-Mischungen dienen dann dem Aufbau eines Reifenrohlings.

Als Body-Mischung werden hierbei die Kautschukmischungen für die sonstigen Bauteile eines Reifen, wie im Wesentlichen Trennplatte, Innenseele (Innenschicht), Kernprofil, Gürtel, Schulter, Gürtelprofil, Karkasse, Wulstverstärker, Wulstprofil, Hornprofil und Bandage. Zur Verwendung der erfindungsgemäßen Kautschukmischung in Riemen und Gurten, insbesondere in Fördergurten, wird die extrudierte noch unvulkanisierte Mischung in die entsprechende Form gebracht und dabei oder nachher häufig mit Festigkeitsträgern, z.B. synthetische Fasern oder Stahlcorde, versehen.

Anschließend erfolgt die Weiterverarbeitung durch Vulkanisation.

Die Erfindung soll nun anhand von Vergleichs- und Ausführungsbeispielen, die in den nachfolgenden Tabellen zusammengefasst sind, näher erläutert werden.

Die allgemeine Zusammensetzung ist in Tabelle 1 angegeben, während die Eigenschaften der unterschiedlichen Mischungen nach Variation des Silans und Menge an Flüssig-Polymer in Tabelle 2 angegeben sind.

Die erfindungsgemäßen Kautschukmischungen sind dabei mit "E" und Vergleichsmischungen mit "V" gekennzeichnet.

**Tabelle 1**

| **Bestandteile** | **Einh.** | **Menge** |
|---|---|---|
| NR | phr | 10 |
| BR | phr | 18 |
| SSBR | phr | 72 |
| Kieselsäure ^{a)} | phr | 95 |
| Weichmacher Öl | phr | 35 |
| Flüssiges Polymer ^{b)} | phr | Var. |
| Flüssiges Polymer ^{c)} | phr | Var. |
| Silan ^{f)} | phf | Var. |
| Silan ^{g)} | phf | Var. |
| Sonstige Zusatzstoffe ^{d)} | phr | 9 |
| Beschleuniger ^{e)} | phr | 4 |
| Schwefel | phr | 2 |

Die Mengenangabe der Silane in phf bezieht sich auf 95 phr Kieselsäure.

Es erfolgte ein molgleicher Austausch des Silans, weswegen sich unterschiedliche Mengen in phf ergeben.

### Verwendete Substanzen

a) Kieselsäure: ULTRASIL^{®} VN 3 GR, Fa. Evonik Industries
b) Flüssiges Polymer: Polybutadien, unfunktionalisiert, Mw = 5500 g/mol, LBR-302, Fa. Kuraray
c) Flüssiges Polymer: Polybutadien, Triethoxysilyl-funktionalisiert, Mw = 3200 g/mol, POLYVEST^{®} EP ST-E 60, Fa. Evonik Operations
d) Sonstige Zusatzstoffe: 2 phr 6PPD, 2 phr Ozonschutzwachs, 2,5 phr Zinkoxid, 2,5 phr Stearinsäure
e) 2 phr DPG, 2 phr CBS
f) NXT, Fa. Momentive; enthält zu > 90 Gew.-% das Silan
   A*) (EtO)₃Si-(CH₂)₃-S-C(=O)-(CH₂)₆-CH₃: anbindend, aber nicht erfindungsgemäß unter Formel A-I)
g) Silan der Formel A-II) und Silan der Formel B-II), Molverhältnis A-II) zu B-II) = 60 zu 40; die Silane wurden folgendermaßen hergestellt:
   Das Silan gemäß Formel A-II) wurde folgendermaßen hergestellt:
      Na₂CO₃ (59,78 g; 0,564 mol) und eine wässrige Lösung von NaSH (40% in Wasser; 79,04 g; 0,564 mol) wurden mit Wasser (97,52 g) vorgelegt. Dann wurde Tetrabutylphosphoniumbromid (TBPB) (50% in Wasser; 3,190 g; 0,005 mol) zugegeben und Acetylchlorid (40,58 g; 0,517 mol) über 1 h zugetropft wobei die Reaktionstemperatur bei 25-32 °C gehalten wurde. Nach vollständiger Zugabe des Acetylchlorids wurde 1 h bei Raumtemperatur gerührt. Dann wurde TBPB (50% in Wasser; 3,190 g; 0,005 mol) und 1-Chlor-6-thiopropyltriethoxysilylhexan (s. oben; 167,8 g; 0,470 mol) zugegeben und 3-5 h am Rückfluss erhitzt. Der Reaktionsfortschritt wurde mittels Gaschromatographie verfolgt. Als das 1-Chlor-6-thiopropyltriethoxysilylhexan zu >96% abreagiert war wurde Wasser zugegeben bis sich alle Salze gelöst hatten und die Phasen wurden separiert. Die flüchtigen Bestandteile der organischen Phase wurden unter vermindertem Druck entfernt und S-(6-((3-(Triethoxysilyl)propyl)thio)hexyl)thioacetat)
      (Ausbeute: 90%, Molverhältnis: 97% S-(6-((3-(Triethoxysilyl)propyl)thio)hexyl)thioacetat (Silan A-II), 3% Bis(thiopropyltriethoxysilyl)hexan (Silan B-II);
      Gew.-%: 96 Gew.-% S-(6-((3-(Triethoxysilyl)propyl)thio)hexyl)thioacetat (Silan A-II), 4 Gew.-% 1,6-Bis(thiopropyltriethoxysilyl)hexan (Silan B-II)) als gelbe bis braune Flüssigkeit erhalten.
   Das Silan der Formel B-II): 1,6-Bis(thiopropyltriethoxysilyl)hexan) wurde folgendermaßen hergestellt:
      Zu Mercaptopropyltriethoxysilan (62,0 g; 0,260 mol; 2,10 eq) wird Natriumethanolat (21% in EtOH; 82,3 g; 0,254 mol; 2,05 eq) so zu dosiert, dass die Reaktionstemperatur nicht 35 °C übersteigt. Nach vollständiger Zugabe wird 2 h am Rückfluss erhitzt. Dann wird das Reaktionsgemisch zu 1,6-Dichlorhexan (19,2 g; 0,124 mol; 1,00 eq) über 1,5 h bei 80 °C zugegeben. Nach vollständiger Zugabe wird 3 h am Rückfluss erhitzt und anschließend auf Raumtemperatur erkalten gelassen. Ausgefallene Salze werden abfiltriert und das Produkt unter vermindertem Druck vom Lösungsmittel befreit. Das Produkt (Ausbeute: 88%, Reinheit: > 99% im ¹³C-NMR) wurde als klare Flüssigkeit erhalten.

NMR-Methode: Die in den Beispielen als Analysenergebnisse angegebenen Molverhältnisse und Massenanteile stammen aus ¹³C-NMR-Messungen mit den folgenden Kennzahlen: 100.6 MHz, 1000 Scans, Lösungsmittel CDCl₃, interner Standard für die Kalibrierung: Tetramethylsilan, Relaxationshilfsmittel Cr(acac)₃, für die Bestimmung des Massenanteils im Produkt wurde eine definierte Menge Dimethylsulfon als interner Standard zugegeben und aus den Molverhältnissen der Produkte dazu der Massenanteil berechnet.

Die hergestellten Silane A-II) und B-II) wurden miteinander vermischt, sodass sich das oben genannte Molverhältnis von 60 zu 40 ergab.

Die Mischungsherstellung erfolgte nach dem in der Kautschukindustrie üblichen Verfahren unter üblichen Bedingungen in drei Stufen in einem Labormischer mit 300 Milliliter bis 3 Liter Volumen, bei dem zunächst in der ersten Mischstufe (Grundmischstufe) alle Bestandteile außer dem Vulkanisationssystem (Schwefel und vulkanisationsbeeinflussende Substanzen) für 200 bis 600 Sekunden bei 145 bis 165 °C, Zieltemperaturen von 152 bis 157 °C, vermischt wurden. In der zweiten Stufe wurde die Mischung aus Stufe 1 noch einmal durchmischt, es wurde ein sogenannter Remill durchgeführt. Durch Zugabe des Vulkanisationssystems in der dritten Stufe (Fertigmischstufe) wurde die Fertigmischung erzeugt, wobei für 180 bis 300 Sekunden bei 90 bis 120 °C gemischt wurde.

Aus sämtlichen Mischungen wurden Prüfkörper durch Vulkanisation nach t95 bis t100 (gemessen am Moving Die Rheometer gemäß ASTM D 5289-12/ ISO 6502) unter Druck bei 160°C bis 170 °C hergestellt und mit diesen Prüfkörpern für die Kautschukindustrie typische Materialeigenschaften mit den im Folgenden angegebenen Testverfahren ermittelt.
- Shore Härte bei Raumtemperatur (RT) und 70 °C gemäß ISO 868, DIN 53 505
- Rückprallelastizität bei Raumtemperatur (RT) und 70°C gemäß ISO 4662 oder ASTM D 1054; Die Angabe der Differenz bedeutet die Differenz der Rückprallelastizität bei 70 °C und der bei RT (Rückpr. 70 °C - Rückpr. RT)
- Spannungswert bei 300% Dehnung bei Raumtemperatur (M300 RT) gemäß DIN 53 504
- Dynamischer Speichermodul E' bei 55 °C aus dynamisch-mechanischer Messung gemäß DIN 53 513, Dehnungsdurchlauf (engl. "strain sweep") bei 8 % Dehnung
- Verlustfaktor tan d, synonym zu tan δ, bei 0 °C aus dynamisch-mechanischer Messung gemäß DIN 53513, Temperaturdurchlauf ("temperature sweep"); 50/30 N: statische Anfangskraft 30 N, dynamische Oszillation zwischen 30 und 50 N
- Abrieb bei Raumtemperatur gemäß DIN/ISO 4649

Wie an Tabelle 2 erkennbar werden mit der erfindungsgemäßen Kombination aus den Silanen A und B und einem flüssigen Polymer ein verbessertes Eigenschaftsbild umfassend das Abriebverhalten, die Rollwiderstands- und Nassgriff- sowie die Handling-Indikatoren erzielt, s. E1 und E2 vs. V1 bis V4 sowie E3 und E4 vs. V1, V2 und V5, V6. Dabei werden insbesondere mit einem funktionalisierten flüssigen Polymer (E3 und E4) verbesserte Rollwiderstandsindikatoren erzielt und der Zielkonflikt aus Rollwiderstand und Nassgriff auf einem hohen Niveau gelöst. Gleichzeitig weisen diese Kautschukmischungen ein sehr gutes Abriebniveau auf. Tabelle 2

| **Bestandteile** | **Einh.** | **V1** | **V2** | **V3** | **V4** | **E1** | **E2** | **V5** | **V6** | **E3** | **E4** |
|---|---|---|---|---|---|---|---|---|---|---|---|
| Flüssiges Polymer ^{b)} | phr | - | - | 10 | 20 | 10 | 20 | - | - | - | - |
| Flüssiges Polymer ^{c)} | phr | - | - | - | - | - | - | 10 | 20 | 10 | 20 |
| Silan ^{f)} | phf | - | 10 | 10 | 10 | - | - | 10 | 10 | - | - |
| Silan ^{g)} | phf | 11,1 | - | - | - | 11,1 | 11,1 | - | - | 11,1 | 11,1 |

| **Eigenschaften** | | | | | | | | | | | |
|---|---|---|---|---|---|---|---|---|---|---|---|
| Shore Härte RT | Shore A | 74 | 69,1 | 61,1 | 54 | 68,6 | 61,5 | 64 | 62,6 | 68,9 | 65,9 |
| Shore Härte 70 °C | Shore A | 69,4 | 64,3 | 55,8 | 48 | 62,8 | 55,7 | 60 | 58,3 | 64,4 | 61,4 |
| Rückprall RT | % | 28,6 | 29,4 | 30,9 | 31,4 | 28,3 | 28,9 | 34,7 | 37,2 | 32,9 | 35,1 |
| Rückprall 70 °C | % | 51,1 | 50,1 | 48,9 | 45 | 46,3 | 44,8 | 53,5 | 53,9 | 54,4 | 53,9 |
| Differenz | % | 22,5 | 20,7 | 18 | 13,7 | 18 | 15,9 | 18,8 | 16,8 | 21,5 | 18,8 |
| M300 RT | MPa | 10,1 | 9,9 | 7 | 4,7 | 7,1 | 5,4 | 8,4 | 7,6 | 9,8 | 8,6 |
| E'(8%) | MPa | 7,2 | 6,6 | 5 | 3,8 | 5,4 | 4,3 | 5,6 | 5,6 | 6,8 | 6,4 |
| tan d (0°C) 50/30 N | | 0,596 | 0,604 | 0,539 | 0,481 | 0,596 | 0,561 | 0,474 | 0,425 | 0,542 | 0,464 |
| DIN Abrieb | mm³ | 127 | 111 | 105 | 209 | 103 | 116 | 101 | 131 | 125 | 126 |

## Patentansprüche

1. Schwefelvernetzbare Kautschukmischung enthaltend wenigstens folgende Bestandteile:
- wenigstens einen Dienkautschuk; und
- wenigstens eine Kieselsäure; und
- 1 bis 40 phr zumindest eines flüssigen Polymers F, welches ein Gewichtsmittel M_{w} des Molekulargewichts gemäß GPC von 500 bis 12000 g/mol aufweist; und
- 1 bis 30 phf wenigstens eines Silans A mit der allgemeinen Summenformel A-I)
A-I) (R¹)ₒSi-R²-(S-R³)_{q}-S-X; und
- 0,5 bis 30 phf wenigstens eines Silans B mit der allgemeinen Summenformel B-I)
B-I) (R¹)ₒSi-R²-(S-R³)ᵤ-S-R²-Si(R¹)ₒ
wobei o gleich 1, 2 oder 3 sein kann und die Reste R¹ gleich oder verschieden voneinander sein können und ausgewählt sind aus C₁-C₁₀-Alkoxygruppen, C₆-C₂₀-Phenoxygruppen, C₂-C₁₀-cyclischen Dialkoxygruppen,
C₂-C₁₀- Dialkoxygruppen, C₄-C₁₀- Cycloalkoxygruppen, C₆-C₂₀- Arylgruppen, C₁-C₁₀-Alkylgruppen, C₂-C₂₀- Alkenylgruppen, C₂-C₂₀- Alkinylgruppen, C₇-C₂₀- Aralkylgruppen, Halogeniden oder
Alkylpolyethergruppe -O-(R⁶-O)ᵣ-R⁷, wobei die Reste R⁶ gleich oder verschieden sind und verzweigte oder unverzweigte, gesättigte oder ungesättigte, aliphatische, aromatische oder gemischt aliphatische/aromatische zweibindige C₁-C₃₀-Kohlenwasserstoffgruppen sind, r eine ganze Zahl von 1 bis 30 ist und die Reste R⁷ unsubstituierte oder substituierte, verzweigte oder unverzweigte einbindige Alkyl-, Alkenyl-, Aryl- oder Aralkylgruppen sind, oder
zwei R¹ entsprechen einer Dialkoxygruppe mit 2 bis 10 Kohlenstoffatomen wobei dann o < 3 ist,
oder es können zwei oder mehr Silane gemäß den Formeln A-I) und/oder B-I) über Reste R¹ oder durch Kondensation verbrückt sein; und
wobei die Bedingung gilt, dass in den Formeln A-I) und B-I) in jeder (R¹)ₒSi-Gruppe wenigstens ein R¹ aus denjenigen oben genannten Möglichkeiten ausgewählt ist, bei der dieses R¹ i) über ein Sauerstoffatom an das Siliziumatom gebunden ist oder ii) ein Halogenid ist; und
wobei die Reste R² und R³ in jedem Molekül und innerhalb eines Moleküls gleich oder verschieden sein können und verzweigte oder unverzweigte, gesättigte oder ungesättigte, aliphatische, aromatische oder gemischt aliphatische/aromatische zweibindige C₁-C₃₀-Kohlenwasserstoffgruppen sind; und wobei
q gleich 1 oder 2 oder 3 ist; und u gleich 1 oder 2 oder 3 ist; und X ein Wasserstoffatom oder eine -C(=O)-R⁸ Gruppe ist wobei R⁸ ausgewählt ist aus Wasserstoff, C₁-C₂₀-Alkylgruppen, C₆-C₂₀-Arylgruppen, C₂-C₂₀-Alkenylgruppen und C₇-C₂₀-Aralkylgruppen.

2. Schwefelvernetzbare Kautschukmischung nach Anspruch 1, **dadurch gekennzeichnet, dass** das flüssige Polymer F ein Polybutadien ist.

3. Schwefelvernetzbare Kautschukmischung nach einem der vorherigen Ansprüche, **dadurch gekennzeichnet, dass** das flüssige Polymer F endständig organosilicium-modifiziert ist.

4. Schwefelvernetzbare Kautschukmischung nach Anspruch 3, **dadurch gekennzeichnet, dass** das flüssige Polymer F an wenigstens einem Kettenende mit einer Trialkoxysilyl-Gruppe modifiziert ist.

5. Schwefelvernetzbare Kautschukmischung nach einem der vorherigen Ansprüche, **dadurch gekennzeichnet, dass** q gleich 1 ist.

6. Schwefelvernetzbare Kautschukmischung nach einem der vorherigen Ansprüche, **dadurch gekennzeichnet, dass** u gleich 1 ist.

7. Schwefelvernetzbare Kautschukmischung nach einem der vorherigen Ansprüche, **dadurch gekennzeichnet, dass** X eine Alkanoylgruppe, ist.

8. Schwefelvernetzbare Kautschukmischung nach einem der vorherigen Ansprüche, **dadurch gekennzeichnet, dass** das Silan A die folgende Struktur gemäß Formel A-II) hat:
A-II) (EtO)₃Si-(CH₂)₃-S-(CH₂)₆-S-C(=O)-CH₃

9. Schwefelvernetzbare Kautschukmischung nach einem der vorherigen Ansprüche, **dadurch gekennzeichnet, dass** das Silan B die folgende Struktur gemäß Formel B-II) hat:

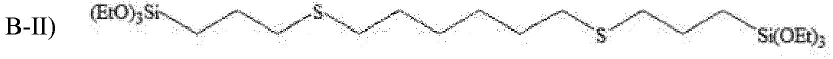

10. Schwefelvernetzbare Kautschukmischung nach einem der vorherigen Ansprüche, **dadurch gekennzeichnet, dass** das Molverhältnis an enthaltenen Silanen A zu enthaltenen Silanen B 20:80 bis 90:10, bevorzugt 55:45 bis 70:30 beträgt.

11. Schwefelvernetzbare Kautschukmischung nach einem der vorherigen Ansprüche, **dadurch gekennzeichnet, dass** der Dienkautschuk ausgewählt ist aus der Gruppe bestehend aus natürlichem Polyisopren (NR), synthetischem Polyisopren (IR), Butadien-Kautschuk (BR), lösungspolymerisiertem Styrol-Butadien-Kautschuk (SSBR) und emulsionspolymerisiertem Styrol-Butadien-Kautschuk (ESBR).

12. Vulkanisat, welches durch Schwefelvulkanisation wenigstens einer Kautschukmischung nach einem der Ansprüche 1 bis 11 erhalten ist.

13. Fahrzeugreifen, **dadurch gekennzeichnet, dass** er in wenigstens einem Bauteil, bevorzugt wenigstens im Laufstreifen, wenigstens ein Vulkanisat nach Anspruch 12 aufweist.

## Claims

1. Sulfur-crosslinkable rubber mixture containing at least the following constituents:
- at least one diene rubber; and
- at least one silica; and
- 1 to 40 phr of at least one liquid polymer F having a weight-average molecular weight M_{w} according to GPC of 500 to 12 000 g/mol; and
- 1 to 30 phf of at least one silane A of general empirical formula A-I)
A-I) (R¹)ₒSi-R²-(S-R³)_{q}-S-X; and
- 0.5 to 30 phf of at least one silane B of general empirical formula B-I)
B-I) (R¹)ₒSi-R²-(S-R³)ᵤ-S-R²-Si(R¹)ₒ
wherein o may be 1, 2 or 3 and the radicals R¹ may be identical or different and are selected from C₁-C₁₀-alkoxy groups, C₆-C₂₀-phenoxy groups, C₂-C₁₀-cyclic dialkoxy groups, C₂-C₁₀-dialkoxy groups, C₄-C₁₀-cycloalkoxy groups, C₆-C₂₀-aryl groups, C₁-C₁₀-alkyl groups, C₂-C₂₀-alkenyl groups, C₂-C₂₀-alkynyl groups, C₇-C₂₀-aralkyl groups, halides or alkyl polyether group -O-(R⁶-O)ᵣ-R⁷, wherein the radicals R⁶ are identical or different and are branched or unbranched, saturated or unsaturated, aliphatic, aromatic or mixed aliphatic/aromatic divalent C₁-C₃₀-hydrocarbon groups, r is an integer from 1 to 30 and the radicals R⁷ are unsubstituted or substituted, branched or unbranched monovalent alkyl, alkenyl, aryl or aralkyl groups or
two R¹ represent a dialkoxy group having 2 to 10 carbon atoms, wherein in that case o < 3,
or two or more silanes according to formulae A-I) and/or B-I) may be bridged via radicals R¹ or by condensation; and
wherein the proviso applies that in formulae A-I) and B-I) in every (R¹)ₒSi-group at least one R¹ is selected from the abovementioned options where this R¹ is i) bonded to the silicon atom via an oxygen atom or ii) is a halide; and
wherein the radicals R² and R³ in each molecule and within a molecule may be identical or different and are branched or unbranched, saturated or unsaturated, aliphatic, aromatic or mixed aliphatic/aromatic divalent C₁-C₃₀-hydrocarbon groups; and wherein
q is 1 or 2 or 3; and u is 1 or 2 or 3; and X is a hydrogen atom or a -C(=O)-R⁸ group, wherein R⁸ is selected from hydrogen, C₁-C₂₀-alkyl groups, C₆-C₂₀-aryl groups, C₂-C₂₀-alkenyl groups and C₇-C₂₀-aralkyl groups.

2. Sulfur-crosslinkable rubber mixture according to Claim 1, **characterized in that** the liquid polymer F is a polybutadiene.

3. Sulfur-crosslinkable rubber mixture according to either of the preceding claims, **characterized in that** the liquid polymer F is terminally organosilicon-modified.

4. Sulfur-crosslinkable rubber mixture according to Claim 3, **characterized in that** the liquid polymer F is modified at at least one chain end with a trialkoxysilyl group.

5. Sulfur-crosslinkable rubber mixture according to any of the preceding claims, **characterized in that** q is 1.

6. Sulfur-crosslinkable rubber mixture according to any of the preceding claims, **characterized in that** u is 1.

7. Sulfur-crosslinkable rubber mixture according to any of the preceding claims, **characterized in that** X is an alkanoyl group.

8. Sulfur-crosslinkable rubber mixture according to any of the preceding claims, **characterized in that** silane A has the following structure according to formula A-II):
A-II) (EtO)₃Si-(CH₂)₃-S-(CH₂)₆-S-C(=O)-CH₃ .

9. Sulfur-crosslinkable rubber mixture according to any of the preceding claims, **characterized in that** silane B has the following structure according to formula B-II):

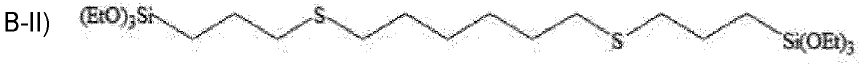

10. Sulfur-crosslinkable rubber mixture according to any of the preceding claims, **characterized in that** the molar ratio of silanes A present to silanes B present is 20:80 to 90:10, preferably 55:45 to 70:30.

11. Sulfur-crosslinkable rubber mixture according to any of the preceding claims, **characterized in that** the diene rubber is selected from the group consisting of natural polyisoprene (NR), synthetic polyisoprene (IR), butadiene rubber (BR), solution-polymerized styrene-butadiene rubber (SSBR) and emulsion-polymerized styrene-butadiene rubber (ESBR).

12. Vulcanizate obtained by sulfur-vulcanization of at least one rubber mixture according to any of Claims 1 to 11.

13. Vehicle tyre, **characterized in that** it comprises at least one vulcanizate according to Claim 12 in at least one component, preferably at least in the tread.

## Revendications

1. Mélange de caoutchouc réticulable au soufre contenant au moins les constituants suivants :
- au moins un caoutchouc diène ; et
- au moins une silice ; et
- 1 à 40 phr d'au moins un polymère liquide F, qui présente une masse moléculaire moyenne en masse M_{w} selon CPG de 500 à 12 000 g/mol ; et
- 1 à 30 phf d'au moins un silane A de formule brute générale A-I)
A-I) (R¹)ₒSi-R²-(S-R³)_{q}-S-X ; et
- 0,5 à 30 phf d'au moins un silane B de formule brute générale B-I)
B-I) (R¹)ₒSi-R²-(S-R³)ᵤ-S-R²-Si(R¹)ₒ
dans laquelle o peut être égal à 1, 2 ou 3, et les radicaux R¹ peuvent être identiques ou différents les uns des autres et sont choisis parmi les groupes alcoxy en C₁-C₁₀, les groupes phénoxy en C₆-C₂₀, les groupes dialcoxy cycliques en C₂-C₁₀, les groupes dialcoxy en C₂-C₁₀, les groupes cycloalcoxy en C₄-C₁₀, les groupes aryle en C₆-C₂₀, les groupes alkyle en C₁-C₁₀, les groupes alcényle en C₂-C₂₀, les groupes alcynyle en C₂-C₂₀, les groupes aralkyle en C₇-C₂₀, les halogénures ou le groupe alkylpolyéther -O-(R⁶-O)ᵣ-R⁷, où les radicaux R⁶ sont identiques ou différents et représentent des groupes hydrocarbonés en C₁-C₃₀ divalents ramifiés ou non ramifiés, saturés ou insaturés, aliphatiques, aromatiques ou mixtes aliphatiques/aromatiques, r représente un nombre entier de 1 à 30, et les radicaux R⁷ représentent des groupes alkyle, alcényle, aryle ou aralkyle monovalents non substitués ou substitués, ramifiés ou non ramifiés, ou
deux R¹ correspondent à un groupe dialcoxy ayant 2 à 10 atomes de carbone, avec alors o < 3,
ou deux silanes ou plus de formules A-I) et/ou B-I) peuvent être pontés sur les radicaux R¹ ou par condensation ; et
dans lequel on a la condition selon laquelle, dans les formules A-I) et B-I), dans chaque groupe (R¹)ₒSi, au moins un R¹ est choisi parmi les possibilités mentionnées ci-dessus pour lesquelles ce R¹ est i) lié à l'atome de silicium par l'intermédiaire d'un atome d'oxygène, ou ii) un halogénure ; et
dans lequel les radicaux R² et R³, dans chaque molécule et à l'intérieur d'une molécule, peuvent être identiques ou différents et représentent des groupes hydrocarbonés en C₁-C₃₀ divalents ramifiés ou non ramifiés, saturés ou insaturés, aliphatiques, aromatiques ou mixtes aliphatiques/aromatiques ; et
q est égal à 1 ou 2 ou 3 ; et u est égal à 1 ou 2 ou 3 ; et X représente un atome d'hydrogène ou un groupe -C(=O)-R⁸ dans lequel R⁸ est choisi parmi l'hydrogène, les groupes alkyle en C₁-C₂₀, les groupes aryle en C₆-C₂₀, les groupes alcényle en C₂-C₂₀ et les groupes aralkyle en C₇-C₂₀.

2. Mélange de caoutchouc réticulable au soufre selon la revendication 1, **caractérisé en ce que** le polymère liquide F est un polybutadiène.

3. Mélange de caoutchouc réticulable au soufre selon l'une des revendications précédentes, **caractérisé en ce que** le polymère liquide F est modifié par un organosilicium en position terminale.

4. Mélange de caoutchouc réticulable au soufre selon la revendication 3, **caractérisé en ce que** le polymère liquide F est modifié par un groupe trialcoxysilyle sur au moins une extrémité de la chaîne.

5. Mélange de caoutchouc réticulable au soufre selon l'une des revendications précédentes, **caractérisé en ce que** q est égal à 1.

6. Mélange de caoutchouc réticulable au soufre selon l'une des revendications précédentes, **caractérisé en ce que** u est égal à 1.

7. Mélange de caoutchouc réticulable au soufre selon l'une des revendications précédentes, **caractérisé en ce que** X représente un groupe alcanoyle.

8. Mélange de caoutchouc réticulable au soufre selon l'une des revendications précédentes, **caractérisé en ce que** le silane A a la structure suivante selon la formule A-II) :
A-II) (EtO)₃Si-(CH₂)₃-S-(CH₂)₆-S-C(=O)-CH₃

9. Mélange de caoutchouc réticulable au soufre selon l'une des revendications précédentes, **caractérisé en ce que** le silane B a la structure suivante selon la formule B-II) :

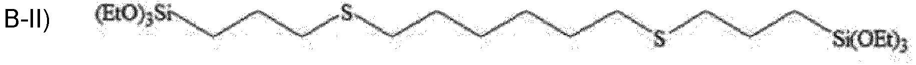

10. Mélange de caoutchouc réticulable au soufre selon l'une des revendications précédentes, **caractérisé en ce que** le rapport en moles des silanes A contenus aux silanes B contenus est de 20:80 à 90:10, de préférence de 55:45 à 70:30.

11. Mélange de caoutchouc réticulable au soufre selon l'une des revendications précédentes, **caractérisé en ce que** le caoutchouc diène est choisi dans le groupe consistant en le polyisoprène naturel (NR), le polyisoprène synthétique (IR), le caoutchouc butadiène (BR), le caoutchouc styrène-butadiène polymérisé en solution (SSBR) et le caoutchouc styrène-butadiène polymérisé en émulsion (ESBR).

12. Vulcanisat pouvant être obtenu par vulcanisation au soufre d'au moins un mélange de caoutchouc selon l'une des revendications 1 à 11.

13. Pneu de véhicule, **caractérisé en ce qu'**il comprend au moins un vulcanisat selon la revendication 12 dans au moins un composant, de préférence au moins dans la bande de roulement.
